# EUROPEAN PATENT APPLICATION

(11) **EP 0 809 057 A1**
(43) Date of publication of application: **26.11.1997**
(21) Application number: 97108085.8
(22) Date of filing: 17.05.1997
(51) Int. Cl.: F16K 31/06, G05D 7/06

(54) **Electromagnetically operated valve assembly**

(30) Priority: 21.05.1996 US 651129
(71) Applicant: EATON CORPORATION, Cleveland, Ohio 44114-2584 (US)
(72) Inventor: Bennett, Larry Paul, Franklin, Michigan 48025 (US); Smith, Danny Melvin, Algonac, Michigan 48001 (US); Getchel, Kurtis Michael, Auburn Hills, Michigan 48326 (US)
(74) Representative: Patentanwälte Rüger, Barthelt & Abel

(57) **Abstract**

A solenoid operated modulated valve has a hollow pressure-balanced spool with an enlarged land for valving. Opposite edges of the land are chamfered to seat against annular seats provided on opposite sides of the controlled flow outlet port. Grooves in the OD of the spool on opposite sides of the land control flow between the controlled flow port and a separate supply port and vent port.

## Description

### BACKGROUND OF THE INVENTION

The present invention relates to the electrically operated flow control valves and more particularly to electromagnetically operated valves of the type having a modulated electrical signal for varying the flow through the valve proportionally to changes in the electrical signal. The invention particularly relates to solenoid operated valves of the type responding to a fractional duty cycle or pulse width modulated electrical signal for producing variable flow through the valve.

Electrically modulated solenoid operated valves find particular application in controlling the flow of hydraulic fluid in certain electrically controlled power transmissions such as, for example, electronically controlled automatic transmissions employed for passenger carrying motor vehicles and light duty over-the-road trucks. In such automotive power transmission valve applications, it is desired to reduce the current required by the solenoid in order to enable operation from a vehicle on-board power supply, as for example a 12 volt DC supply. Heretofore, modulated solenoid operated valves employed for such automotive transmission applications have been either nonpressure-balanced ball or poppet type construction or of the pressure-balanced spool type construction requiring precision manufacturing of the spool and significantly higher manufacturing costs. The nonpressure-balanced ball or poppet type typically exhibit erratic or undesired flow characteristics as a function of the changes in duty cycle or pulse width of the electrical control signal which characteristics are caused by the substantial operating force requirements of the nonpressure-balanced poppet design.

It has thus been desired to provide a low cost easy-to-manufacture solenoid operated flow control valve which provides substantially linear flow control with respect to changes in the duty cycle or pulse width of the electrical control signal operating the solenoid.

### SUMMARY OF THE INVENTION

It is an object of the present invention to provide a simplified and reliable solenoid operated flow control valve that provides a controlled flow output and a vent or return to sump function and that is reliable and low in manufacturing costs.

It is a further object of the present invention to provide such a valve that is reliable and particularly suitable for use in controlling the flow of hydraulic fluid in automotive power transmission applications operating from the low voltage on-board vehicle power supply with a minimum of current draw.

The present invention provides an electrically modulated solenoid operated pressure-balanced spool valve having a valving land formed thereon which contacts a valve seat formed adjacent one of the ports in the manner of a poppet and limits axial movement of the spool.

It is a further object of the present invention to provide an electrically modulated solenoid operated pressure-balanced spool flow control valve having a short spool stroke and which prevents the spool from making contact with a magnetic pole piece.

The present invention provides a solenoid operated pressure-balanced spool valve having an enlarged diameter land thereon for valving between the supply port and a controlled flow signal port and between the signal and a vent or exhaust port with a seating surface formed adjacent the signal port for providing a stop for the enlarged diameter land to limit the stroke of the spool and prevent the end of the spool from contacting a stationery pole piece. The spool acts as the armature in the magnetic lux loop of the solenoid.

The present invention provides a solenoid operated pressure balanced spool valve which provides relatively large flow for a relatively short stroke of the spool thereby requiring a reduced pull-in air gap resulting in faster response of the valve to a pulse width-modulated electrical signal to the solenoid. The valve of the present invention may be either normally open or normally closed by reversing the supply and exhaust ports.

### BRIEF DESCRIPTION OF THE DRAWINGS

**FIG. 1** is an exploded view of the valve assembly of the present invention;
**FIG. 2** is a cross section of the assembled valve of FIG. 1;
**FIG. 3** is an enlarged view of a portion of the valve of FIG. 2; and
**FIG. 4** is a graphical plot of values of the pressure ratio as a function of the fractional duty cycle of the electrical control signal for the valve of FIG. 1.

### DETAILED DESCRIPTION

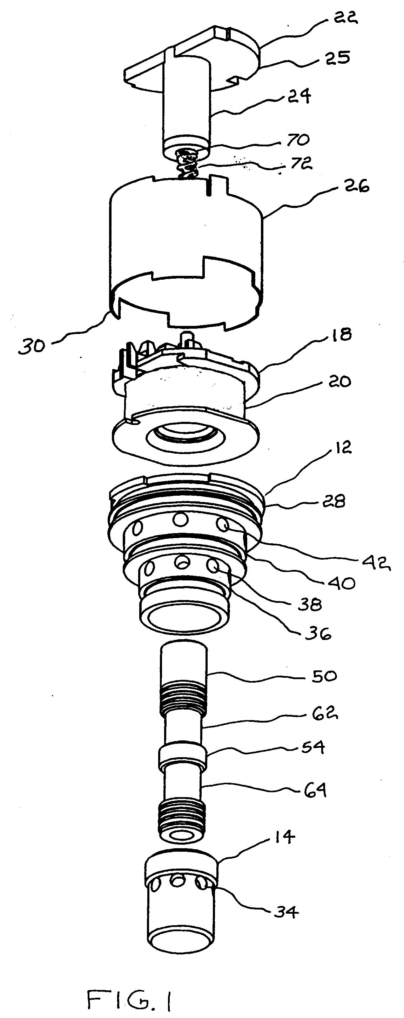

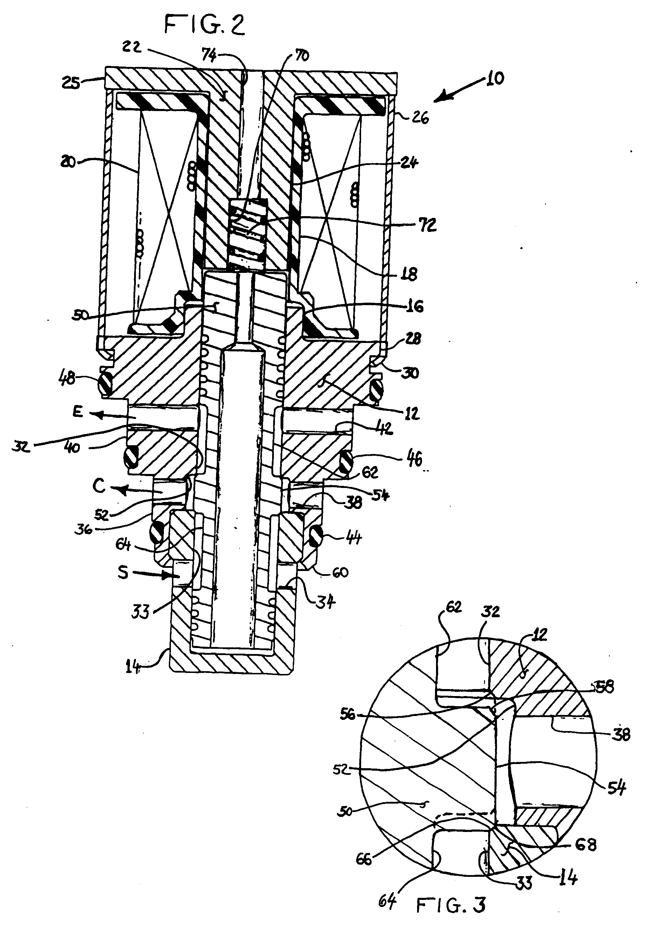

Referring to FIGS. 1 and 2, the valve assembly, indicated generally at 10, has a body or upper seat portion 12 attached to a lower seat portion 14 to form a valve housing. Upper seat or body 12 has a reduced diameter portion 16 formed on the upper end thereof which has received there over a bobbin 18 of insulating material in closely fitting engagement or press fit if desired; and, bobbin 18 has wound thereon a coil 20 of electrically conductive wire. A pole piece 22 formed of ferro magnetic material, or material of high magnetic permeability has a generally "T" shaped configuration in cross-section as shown in FIG. 2 with a reduced diameter portion 24 thereof received in the bobbin 18. Pole piece 22 has the enlarged diameter flange or head portion 25 thereof having a cylindrical case or can 26 attached thereto at the outer periphery of flange 25, with the lower end of the can 26 engaging flange 28 formed on the upper end of the body 12 and secured thereon by any suitable expedient as for example crimping as denoted by reference numeral 30.

Body 12 has a valving bore 32 formed therein which extends into the lower seat 14 as denoted by reference numeral 33. The lower seat portion of the housing 14 has a first port in the form of cross-bore 34 formed therein; and, body 12 has a reduced diameter portion 36 formed thereon with a second valve port in the form of cross bore 38 formed therein and which functions as a controlled flow outlet or signal port. Body 12 has a second enlarged diameter 40 which has formed therein a third valve port in a form of cross bore 42. Reduced diameter portion 36 has a groove and seal ring 44 provided thereon. The second diameter 40 of the body 12 has also a groove and second seal ring 46 provided there around.

The upper section of body 12 has an enlarged diameter portion greater than the diameter of portion 40 and which has a groove formed therein and is provided with an annular seal ring 48. The body 12 is thus intended to be inserted in a valving structure having three distinct counterbore diameters for engaging and sealing each of the seal rings 44, 46, 48.

Valving bore 32 has received therein a spool 50 formed of material of high magnetic permeability and sized and configured for closely fitting sliding engagement therein.

The body 12 has provided therein an annular undercut or enlarged diameter portion 52 formed in bore 32 and intersecting the second port bore 38. Spool 50 has provided thereon an enlarged diameter land 54 which is located coincident with the second port bore 38.

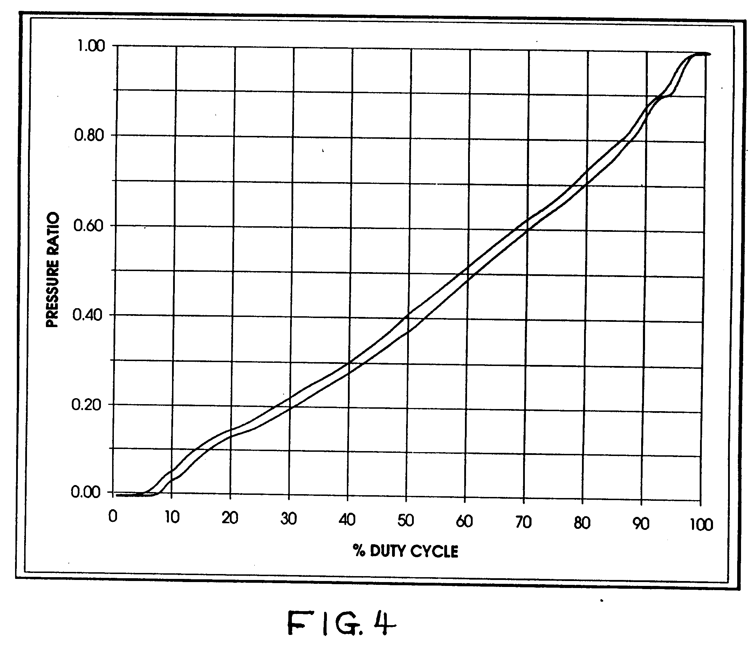

Referring to FIG. 3, an annular seating surface 56 is formed at the intersection of the side of undercut 52 and bore 32 to provide a seating surface. The corresponding adjacent end of land 54 is chamfered as denoted by reference numeral 58 and serves as a stop or limit for the travel or movement in an upward direction of the spool 50. It will be understood that spool 50 is assembled into bore 32 prior to the attachment of the lower seat or body portion 14 to the body structure 12 as denoted by the rollover or crimp with reference numeral 60. The spool has an annular valving grooves 62, 64 formed on the opposite sides of the land 50 for providing fluid communication between the third port 42 and the control port 38; and, between control port 38 and the first port 34.

The lower seat or body portion 14 has formed thereon a chamfer or seating surface 66 at the intersection of bore 33 and the edge of groove 52 bore forming an opposing seating surface against which a corresponding chamfer 68 on the opposite side of land 54 is seated when the spool 50 is in the downward limit of its movement, as shown in FIG. 3.

The reduced diameter portion 24 of the pole piece has a counterbore 70 formed in the lower end thereof with a spring 72 received therein with the lower end of the spring registered against the upper end of the spool 50 for biasing the spool in a downward direction so as to cause the chamfer 68 to register against seat 66. Counterbore 70 is connected to an open passage 74 extending upwardly through the pole piece 22.

Referring to FIG. 3, the valve is shown in the normally closed position with the port 34 connected as a pressure supply port and port 38 connected as a signal or control port and port 42 connected as a sump return or exhaust port. The spool 50 is shown in the position of closing fluid communication between ports 34 and 38 permitting venting of the control port 38 through exhaust port 42 which represents the coil deenergized state. It will be understood that when the coil 20 is energized, spool 50 is attracted magnetically to move in an upward direction toward pole piece 22 and causes the chamfer 58 to seat against seating surface 56 thereby permitting fluid communication between the supply port 34 and the control port 38 for the period of time during which the solenoid is energized, typically a fractional portion of the pulse control signal applied to the coil 20.

Upon again deenergizing the coil, spring 72 moves the spool downwardly to cause chamfer 68 to again register against seating surface 66 closing off the supply port 34 from control port 38 and venting the control port 38 via groove 62 to exhaust port 42. In the present practice of the invention, when the spool is at its upward limit of travel, an air gap of 0.004 inches (0.10mm) is present between the upper end of spool 50 and pole piece 22.

The present invention thus provides a simplified, reliable, and relatively low cost construction for a solenoid operated pressure balance spool valve having relatively high flow and rapid response when energized with a pulse with modulated control signal for providing flow proportional to the fraction of the time the coil is energized. The construction of the present invention eliminates the need for precision tolerance control between the spool and the bore in which the spool is shuttled; and, the spool has annular chamfers on opposite sides of the valving land which chamfers alternately seat against annular valve seats in the manner as a poppet to provide positive limiting of the spool stroke and complete shut off of the flow between the valved ports.

Although the valve has been illustrated with the lower port as the supply port and the upper port as the exhaust port, it will be understood that this arrangement may be reversed with the upper port 42 provided as a supply port and the lower port 34 functioning as the exhaust port, in which case, the valve would be normally open with respect to the supply port 42 and the signal or control port 38.

Although the invention has herein above been described with respect to the illustrated embodiments, it will be understood that the invention is capable of modification and variation and is limited only by the following claims.

## Claims

1. An electromagnetically operated valve assembly comprising:
(a) body structure defining a valving bore having an elongated hollow valve member formed of magnetically permeable material moveably disposed therein;
(b) first, second and third fluid ports formed in said body structure and communicating with said bore in axially spaced arrangement;
(c) an annular seating surface formed in said bore adjacent said second port;
(d) an annular land formed on said valve member intermediate the ends thereof with a first and second annular groove formed on axially opposite sides of said land, said land operable to contact said annular seating surface for limiting said movement of said valve member in one direction; and,
(e) electromagnetic means associated with said body structure and operable, upon selective electrical energization, to generate a magneto-motive force and effect said movement of said valve member, wherein upon movement of said valve member in one direction in said bore said first annular groove is operable to effect fluid communication between said first and second ports and upon movement of said valve member in an opposite direction in said bore said second annular groove is operable to effect fluid communication between said second and third fluid ports.

2. The valve assembly defined in claim 1, wherein said valve member land has the greatest transverse dimension of said valve member.

3. The valve assembly defined in claim 1, wherein said valve member is spring biased for movement in a direction to move said land away from said seating surface.

4. The valve assembly defined in claim 1, wherein said body structure includes a first and second member joined together along a parting line disposed intermediate said first and second fluid ports.

5. The valve assembly defined in claim 1, wherein said second port is disposed axially intermediate said first and third ports with respect to said bore; and, said second port is a controlled outlet port with one of said first and third ports functioning as a pressure supply port and the other of said first and third ports functioning as a vent or sump return port.

6. The valve assembly defined in claim 1, wherein said electromagnetic means includes a coil and magnetically permeable pole frame disposed on said body structure.

7. The valve assembly defined in claim 1, wherein said first, second and third fluid ports are formed respectively on cylindrical surfaces on said body structure, said surfaces having progressively increased diameter.

8. The valve defined in claim 7, wherein said cylindrical surfaces are concentrically disposed.
